(19) Europäisches Patentamt
European Patent Office
Office européen des brevets

(11) Veröffentlichungsnummer : **0 026 418**
**B1**

(12) # EUROPÄISCHE PATENTSCHRIFT

(45) Veröffentlichungstag der Patentschrift : **08.02.84**

(51) Int. Cl.³ : **B 01 D 53/34**, C 01 B 21/40

(21) Anmeldenummer : **80105668.0**

(22) Anmeldetag : **20.09.80**

(54) **Verfahren zur Absorption nitroser Gase.**

(30) Priorität : **29.09.79 DE 2939674**

(43) Veröffentlichungstag der Anmeldung : **08.04.81 Patentblatt 81/14**

(45) Bekanntmachung des Hinweises auf die Patenterteilung : **08.02.84 Patentblatt 84/06**

(84) Benannte Vertragsstaaten : **AT BE CH DE FR GB IT LI NL**

(56) Entgegenhaltungen :
**EP-A- 0 001 834**
**DE-A- 2 058 108**
**FR-A- 2 006 081**
**FR-A- 2 150 416**
**FR-A- 2 407 736**
**GB-A- 995 207**
**US-A- 4 081 517**

(73) Patentinhaber : **HOECHST AKTIENGESELLSCHAFT**
**Postfach 80 03 20**
**D-6230 Frankfurt am Main 80 (DE)**

(72) Erfinder : **Herbrechtsmeier, Peter, Dr.**
**Berliner Strasse 10**
**D-6238 Hofheim am Taunus (DE)**
Erfinder : **Steiner, Rudolf, Dr. Prof.**
**Unterm Waldweg 17**
**D-6231 Sulzbach (DE)**
Erfinder : **Vilcsek, Herbert, Dr.**
**Eichenweg 17**
**D-6200 Wiesbaden (DE)**

EP 0 026 418 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren zur Absorption nitroser Gase

Die vorliegende Erfindung betrifft ein Verbessertes Verfahren zur Absorption nitroser Gase in verdünnter Salpetersäure.

Die Absorption nitroser Gase in Wasser wird als großtechnischer Prozeß bei der Herstellung von Salpetersäure durchgeführt. Während dafür früher Füllkörperkolonnen als Gas-Flüssig-Kontaktapparate eingesetzt wurden, geht heute die Tendenz zur Verwendung von Bodenkolonnen (E. Bahari, Nitric Acid Manufacture, Chem. Proc. Engineering (1965) 16).

Bei der Auslegung dieser Absorptionsanlagen wird berücksichtigt, daß eine Erhöhung des Druckes sowie eine Herabsetzung der Temperatur in der Kolonne den Absorptionsgrad erhöht. Die bei der Absorption ablaufenden Vorgänge kann man mit den Bruttogleichungen

$$2\ NO_{(g)} + O_{2(g)} = 2\ NO_{2(g)} \qquad (1)$$

$$3\ NO_{2(g)} + H_2O_{(fl)} = 2\ HNO_{3(fl)} + NO_{(g)} \qquad (2)$$

beschreiben, mit den Indices (g) für die Gasphase und (fl) für die Flüssigphase. Dabei ist bekannt, daß die homogene Gasphasenoxidation (1) den geschwindigkeitsbestimmenden Schritt für die Gesamtreaktion (1) plus (2) darstellt. Eine Erniedrigung der Temperatur und eine Erhöhung des Druckes verkürzen die Oxidationszeit. Daneben läßt sich der $NO_x$-Oxidationsgrad des in die Absorptionskolonne eingeführten Gases und damit auch der Stufenabsorptionsgrad durch eine Vergrößerung der Verweilzeit des Gases und des Gasraumes zwischen den einzelnen Absorptionsstufen erhöhen. Einer solchen Vergrößerung sind allerdings bei den ohnehin schon notwendigen großen Kolonnenvolumina durch das Auftreten von Stabilitätsproblemen beim Kolonnenbau sowie durch eine Verschlechterung des Stufenwirkungsgrades der Füllkörper- oder Bodenkolonne Grenzen gesetzt.

In der Technik werden noch mit Raschig-Ringen gefüllte Absorptionskolonnen, die mit verdünnter Salpetersäure berfieselt werden, oder Bodenkolonnen zur Absorption von nitrosen Gasen eingesetzt. Dabei lassen sich die letzten Reste an Stickoxiden jedoch nur schlecht entfernen (Ullmanns Enzykolopädie der Technischen Chemie, 3. Auflage, Band 15, Seite 26). Sowohl bei Einsatz von Füllkörperkolonnen wie von Bodenkolonnen ist die Absorptionswirksamkeit für nitrose Gase nicht besonders hoch. Daher müssen in der Technik sehr große Absorbereinheiten zur Erzielung einer kleinen $NO_x$-Restgaskonzentration eingesetzt werden.

Der Erfindung liegt nun die Aufgabe zugrunde, ein Verfahren zur Absorption nitroser Gase zu Schaffen, das sich gegenüber den bisher bekannten Verfahren durch einen höheren $NO_x$-Stufen-Absorptionsgrad auszeichnet, d. h. das es erlaubt, bei gleichem Effekt und vorgegebener Bauhöhe die Anzahl der Absorbereinheiten zu minimieren und dadurch gleichzeitig das Gesamtvolumen der Absorberanlage gegenüber herkömmlichen Anlagen zu verringern.

Mit dem $NO_x$-Stufen-Absorptionsgrad (ausgedrückt in %) wird hier der Ausdruck $((V_E - V_A)/V_E) \cdot 100$ bezeichnet.

Dabei ist $V_E$ die Konzentration eines Gases an $NO_x$, das in eine stark rückvermischte Schicht einer Absorptionsflüssigkeit eingeleitet wird, und $V_A$ die Konzentration eines Gases an $NO_x$, das diese absorbierende Flüssigkeitsschicht verläßt. (Mit $NO_x$ ist $NO + NO_2$ gemeint). Eine solche Flüssigkeitsschicht befindet sich bei einer Bodenkolonne im Betrieb auf jedem Boden, so daß formal ein praktischer Boden einer hier definierten mit Absorptionsflüssigkeit gefüllten Stufe entspricht.

Bei Füllkörperkolonnen liegt weder eine entsprechende Flüssigkeitsschicht, noch eine Rückvermischung in vertikaler Richtung vor.

In Füllkörperkolonnen lassen sich analoge Trenneinheiten nach bekannten experimentelellen Verfahren ermitteln, so daß man angeben kann, welche Kolonnenhöhe einer Trennstufe und damit der hier definierten flüssigkeitsgefüllten Stufe entspricht. Anschließend müssen für den Abschnitt der Füllkörperkolonne, der einer Stufe entspricht, experimentell $V_E$ und $V_A$ für nitrose Gase ermittelt werden. Damit läßt sich auf für Füllkörperkolonnen der $NO_x$-Stufen-Absorptionsgrad ermitteln.

Es wurde nun ein Verfahren gefunden zur Entfernung von Stickoxiden aus einem Gasgemisch, das $NO_2$, NO und $O_2$ enthält und bei dem das Gasgemisch von unten kontinuierlich in 2 bis 5 hintereinander angeordnete Absorptionssäulen eingeleitet wird. Das Verfahren ist dadurch gekennzeichnet, daß man das Gasgemisch mit Leerrohrgeschwindigkeiten von 10 bis 30 cm/s durch die Absorptionssäulen leitet, die als Blasensäulen ausgebildet sind und die durch eingebaute Gasverteilerorgane jeweils in mehrere übereinander angeordnete Zonen unterteilt sind, in denen die verdünnte Salpetersäure jeweils 20 bis 100 cm hoch steht, und die Gasverteilerorgane die beim Aufsteigen in der verdünnten Salpetersäure auftretenden großen Gasblasen wieder in kleinere Blasen zerlegen, man die verdünnte Salpetersäure in jeder Blasensäule unten aufgibt und oben abnimmt und man die einzelnen Blasensäulen so hintereinander schaltet, daß verdünnte Salpetersäure und das Gasgemisch im Gegenstrom zueinander geführt werden. Bevorzugt werden füllkörperlose Blasensäulen.

Die Verwendung eines Blasensäulen-Abstromreaktors zur Absorption von nitrosen Gasen, die hierzu mit sauerstoffhaltigen Gasen vermischt werden, ist aus der EP-A-0 001 834 bekannt. Allerdings werden hier Wasser und Gasphase am Kopf der Säule aufgegeben, das Gas entgegengesetzt zu seiner Auftriebsrichtung von oben nach unten im Flüssigkeitsstrom transportiert und verdünnte Salpetersäure sowie das Gas am Boden der Säule abgezogen.

Die Hintereinanderschaltung mehrerer Füllkörperkolonnen bei der kontinuierlichen Absorption von nitrosen Gasen ist aus der DE-C-1 299 610 bekannt. Dabei wird die Gasphase am unteren Ende der Säulen eingeleitet und oben Wasser als Absorptionsmittel aufgegeben. Hierbei wird jedoch in einer einzelnen Kolonne Gas und Flussigkeit im Gegenstrom geführt. Ferner liegt in einer Füllkörperkolonne das Gas als kontinuierliche Phase vor und ist nicht blasenförmig dispergiert.

Aus der DE-A-2 058 108 ist ein Verfahren bekannt, bei dem ein Gas, das durch nitrose Gase verunreinigt ist, kontinuierlich in Absorptionskammern von unten eingeführt wird und in diesen mit einer Absorptionslösung besprüht wird. Die Absorptionskammern sind als Füllkörpersäulen ausgebildet. Zwischen zwei Absorptionskammern ist jeweils eine Oxidationssäule vorgesehen. Nachteilig ist, daß für eine zufriedenstellende Absorption eine große Zahl von Absorptionskammern benötigt wird.

Das in die Blasensäule eingeleitete Gas enthält NO, $O_2$ und $NO_2$ (bzw. damit im Gleichgewicht stehend $N_2O_4$ und $N_2O_3$). In der Blasensäule kann neben der Absorption von $NO_2$ auch eine Oxidation von NO stattfinden. Das Gas, das die Blasensäule verläßt, enthält jedoch in der Regel an Stickstoffoxiden hauptsächlich nur noch NO.

Zwar läßt sich durch eine Füllkörper- oder Bodenkolonne ein vorgegebener $NO_2$-Gehalt ebenfalls weitgehend entfernen. Durch die Verwendung einer Blasensäule läßt sich die Bauhöhe einer Vorrichtung zur Absorption von Stickoxiden jedoch erheblich verringern.

Die in der Technik für die $NO_2$-Absorption eingesetzten Bodenkolonnen werden üblicherweise mit Flüssigkeitsschichthöhen von 30 bis 70 mm pro Boden betrieben, wobei das durchgesetzte Gas auf jedem Boden eine Sprudelschicht ohne eindeutig anzugebende dispergierte Phase ausbildet. Im Gegensatz dazu liegt in der für Blasensäulen üblichen Betriebsweise die Gasphase als disperse und die Flüssigkeit als kontinuierliche Phase vor. Auch sind die beim erfindungsgemäßen Verfahren benutzten Gasleerrohrgeschwindigkeiten teilweise niedriger als die bei der Benutzung von Bodenkolonnen üblichen Werte.

Vorteilhaft sind relative Gasgehalte in der Blasensäule von 5 bis 30 Vol.-%, insbesondere 5 bis 20 Vol.-%.

Unter « Leerrohrgeschwindigkeit » wird der Quotient von Gasstrom durch die Blasensäule (gemessen in Volumen/Zeiteinheit) und freiem Querschnitt der Blasensäule (Fläche) verstanden. Bei Leerrohrgeschwindigkeiten über 10 cm/sec wird die Absorption deutlich verschlechtert. Leerrohrgeschwindigkeiten unter 2 cm/sec bewirken nur noch eine geringfügige weitere Verbesserung, sind aber — wegen der geringen Ausnutzung der Blasensäulen-Kapazität — unwirtschaftlich.

Der Vorteil der Verwendung wässriger Salpetersäure als Absorptionsmittel liegt darin, daß als Reaktionsprodukt freie Salpetersäure auftritt, die nach an sich bekannten technischen Verfahren in konzentrierter Form gewonnen werden kann. Besonders günstig ist die Verwendung einer wässrigen Salpetersäure mit einem Gehalt von 5 bis 70, insbesondere 10 bis 40 Gew.-% $HNO_3$ als Absorptionsmittel.

Obwohl die NO-Oxidation bei höheren Drucken rascher verläuft, ist der Druck für das erfindungsgemäße Verfahren nicht kritisch. Bevorzugt sind aus wirtschaftlichen Gründen Drucke von 1 bis 50 bar. Vorzugsweise wird das erfindungsgemäße Verfahren bei Temperaturen von 0 bis 50, insbesondere 10 bis 40 °C durchgeführt. Bei höheren Temperaturen verringert sich die Geschwindigkeit der $NO_2$-Bildung aus NO.

Bei dem erfindungsgemäßen Verfahren wird die Flüssigkeit und das Gas im Gleichstrom von unten nach oben durch die Blasensäule geführt. Bedingt durch ein Schwingen der Flüssigkeitsschicht schwappt kurzzeitig Flüssigkeit an den nächst höheren Gasverteiler, so daß die flüssige Phase nach oben durch die Blasensäule befördert wird.

Bevorzugt sind Leerrohrgeschwindigkeiten von 10 bis 25 cm/sec.

Im allgemeinen ist dabei die Anzahl der einzusetzenden Gasverteilerorgane um so höher, je höher die Gasleerrohrgeschwindigkeit ist.

Die Figur stellt eine Blasensäule-Kaskade dar, in der jede Blasensäule 4 ($4_1$, $4_2$) durch drei Gasverteilerorgane 8, 8A und 8B ($8_1$, $8A_1$, $8B_1$ bzw. $8_2$, $8A_2$, $8B_2$) in vier Absorptionszonen (z. B. 5, 5A, 5B, 5C) unterteilt ist. Insgesamt wird die Flüssigkeit im Gegenstrom zur Gasphase geführt, in den einzelnen mit Gasverteilerorganen versehenen Blasensäulen jedoch im Gleichstrom zur Gasphase. Es handelt sich somit um ein kombiniertes Gleichstrom-/Gegenstromverfahren.

Stickoxidhaltiges Gas wird durch Leitung 3 (1A, $1A_1$) von unten in die unterteilten Blasensäulen 4 ($4_1$, $4_2$) eingeführt, das behandelte Gas oben abgenommen und in der folgenden Blasensäule wieder unten eingeführt. Die Absorptionsflüssigkeit wird durch Leitung $6_3$ eingeführt, wandert durch das System (Säule $4_2$, Leitung $6_2$, Säule $4_1$, Leitung $6_1$, Säule 4) und wird durch Leitung 6 wieder ausgeschleust. Selbstverständlich können die einzelnen Blasensäulen (4, $4_1$, $4_2$) der Figur auch in integrierter Kolonnenbauweise übereinander angeordnet werden. Der Rohrreaktor (2) kann auch weggelassen werden.

Eine solche Kaskaden-Konstruktion stützt sich auf die Erkenntnis, daß — im Gegensatz zum Stand der Technik — schon wenige Gegenstromstufen zur Erzielung eines hohen Absorptionsgrades für $NO_2$ ausreichen. Die Zahl der zusätzlichen Gasverteiler pro Stufe hängt von der Gaz-Leerrohrgeschwindigkeit ab. Es reichen pro Blasensäule vorzugsweise 2-3 zusätzliche Gasverteiler bei Leerrohrgeschwindigkeiten bis 30 cm/sec aus. Auch mehr als 5 Gasverteiler sind möglich, erbringen aber nur eine geringe zusätzliche Verbesserung.

Selbstverständlich kann man die beschriebene

Methode, auftretende große Gasblasen zu zerkleinern auch dann anwenden, wenn das $NO_2$, NO und $O_2$ enthaltende Gasgemisch in einem Strömungsrohr anfällt.

Die Absorption von Stickoxiden in Blasensäulen ist bereits aus der DE-A-17 67 201 bekannt. Jedoch wird nach dieser Literaturtelle, die die Herstellung von Ammoniumnitrilotrisulfonat betrifft, völlig anders gearbeitet.

## Ansprüche

1. Verfahren zur Entfernung von Stickstoffoxiden aus Gasgemischen, die $NO_2$, NO und $O_2$ enthalten, durch Absorption in verdünnter Salpetersäure, wobei das Gasgemisch von unten kontinuierlich in 2 bis 5 hintereinander angeordnete Absorptionssäulen eingeleitet wird, dadurch gekennzeichnet, daß man das Gasgemisch mit Leerrohrgeschwindigkeiten von 10 bis 30 cm/s durch die Absorptionssäulen leitet, die als Blasensäulen ausgebildet sind und die durch eingebaute Gasverteilerorgane jeweils in mehrere übereinander angeordnete Zonen unterteilt sind, in denen die verdünnte Salpetersäure jeweils 20 bis 100 cm hoch steht, und die Gasverteilerorgane die beim Aufsteigen in der verdünnten Salpetersäure auftretenden großen Gasblasen wieder in kleinere Blasen zerlegen, man die verdünnte Salpetersäure in jeder Blasensäule unten aufgibt und oben abnimmt und man die einzelnen Blasensäulen so hintereinander schaltet, daß verdünnte Salpetersäure und das Gasgemisch im Gegenstrom zueinander geführt werden.

2. Verfahren nach Anspruch 1, dadurch gekennzeichnet, daß die Blasensäulen in jeweils 3 bis 4 Zonen unterteilt sind.

## Claims

1. Process for the removal of nitric oxides from gas mixtures which contain $NO_2$, NO and $O_2$ by absorption in dilute nitric acid ; the gas mixture being introduced continuously from below into 2 to 5 series-connected absorption columns ; which comprises passing the gas mixture at a superficial velocity of 10 to 30 cm/sec. through the absorption columns which are constructed as bubble columns and divided by incorporated gas distributor devices into several zones arranged one above the other in each of which the dilute nitric acid has a level of from 20 to 100 cm and the gas distributor devices disperse the large bubbles of gas formed when the gas rises in the dilute nitric acid into smaller bubbles ; introducing the dilute nitric acid into each bubble column at the bottom and removing it at the top and connecting the individual bubble columns in series such that the dilute nitric acid and the gas mixture are passed in counter-current to one another.

2. Process as claimed in claim 1, wherein the bubble columns are divided into 3 to 4 zones each.

## Revendications

1. Procédé pour éliminer des oxydes d'azote de mélanges gazeux contenant $NO_2$, NO et $O_2$, par absorption dans de l'acide nitrique dilué, le mélange gazeux étant introduit en continu par en bas dans un ensemble de 2 à 5 colonnes d'absorption montées en série, procédé caractérisé en ce qu'on fait passer le mélange gazeux, à des vitesses en tube vide de 10 à 30 cm/s, dans les colonnes d'absorption qui sont conçues comme des colonnes à bulles et sont divisées chacune, par des organes répartiteurs de gaz incorporés, en plusieurs zones superposées dans lesquelles se trouve l'acide nitrique dilué, à chaque fois sur une hauteur de 20 à 100 cm, ces organes répartiteurs de gaz réduisant à nouveaux en petites bulles les grosses bulles gazeuses qui se forment au cours de l'ascension dans l'acide nitrique dilué, on introduit l'acide nitrique dilué par en bas dans chacune des colonnes et on le retire par en haut, et on monte en série les différentes colonnes à bulles de telle façon que l'acide nitrique dilué et le mélange gazeux circulent à contre-courant l'un par rapport à l'autre.

2. Procédé selon la revendication 1, caractérisé en ce que les colonnes à bulles sont divisées chacune en 3 ou 4 zones.

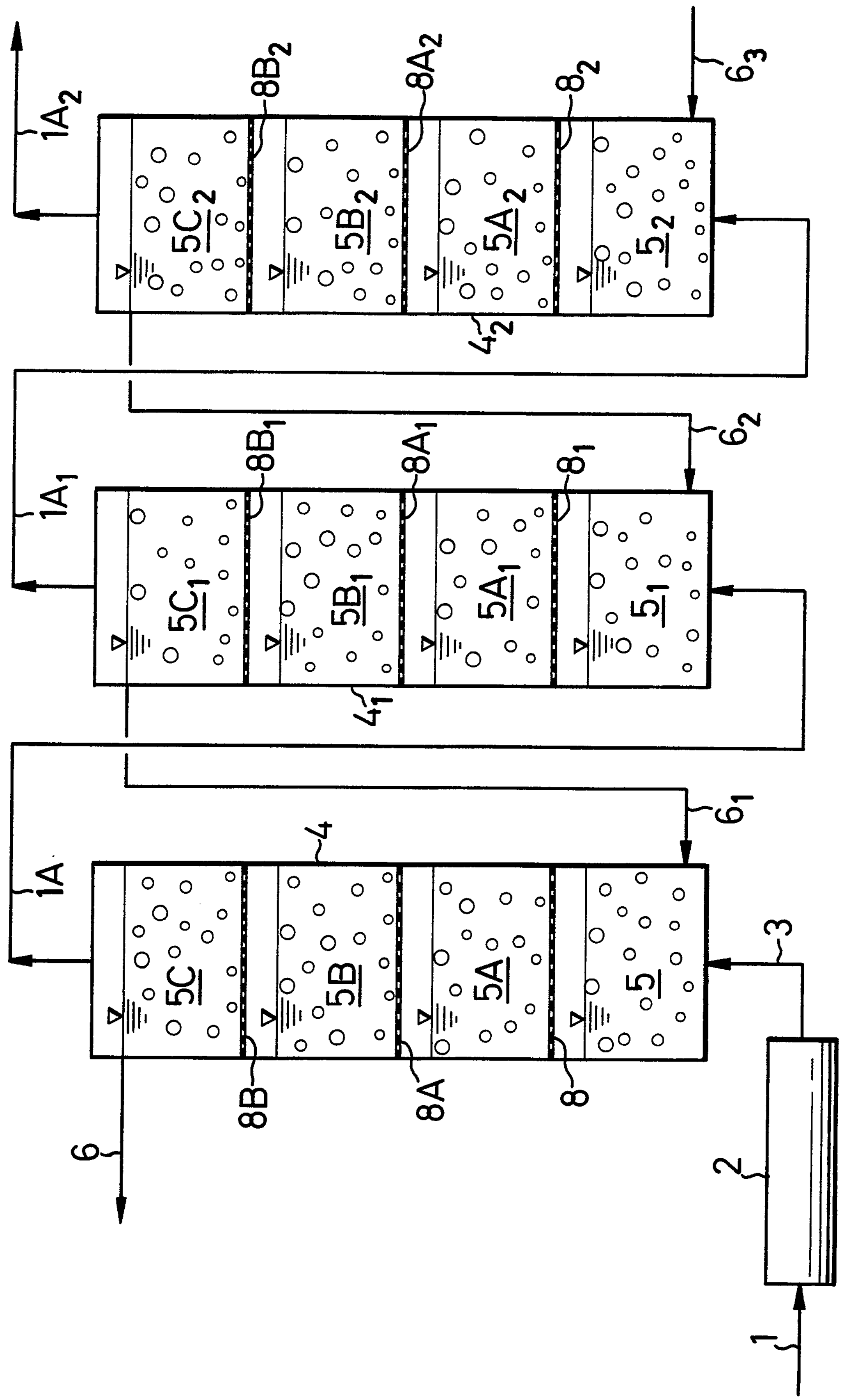
1A2
8B2
8A2
82
63
5C2
5B2
5A2
52
42
62
1A1
8B1
8A1
81
5C1
5B1
5A1
51
41
61
1A
4
5C
5B
5A
5
3
8B
8A
8
6
2
1